# EUROPEAN PATENT APPLICATION

(11) **EP 4 524 763 A1**
(43) Date of publication of application: **19.03.2025**
(21) Application number: 23819283.5
(22) Date of filing: 11.06.2023
(51) Int. Cl.: G06F 16/242, G06F 16/245, G06F 16/2453, G06F 16/2455, G06F 16/22, G06F 16/13

(54) **DATA PROCESSING SYSTEM AND APPARATUS**

(30) Priority: 10.06.2022 CN 202210657406; 06.09.2022 CN 202211096488
(71) Applicant: Huawei Technologies Co., Ltd., Shenzhen, Guangdong 518129 (CN)
(72) Inventor: LIAO, Denghong, Shenzhen, Guangdong 518129 (CN); ZHANG, Qi, Shenzhen, Guangdong 518129 (CN); TU, Tianyi, Shenzhen, Guangdong 518129 (CN)
(74) Representative: Gill Jennings & Every LLP
(86) International application number: PCT/CN2023/099566
(87) International publication number: WO 2023/237120

(57) **Abstract**

A data processing system and an apparatus are provided. The system includes a coordinator node, a plurality of index nodes, and a plurality of worker nodes. The coordinator node generates a first query task based on a query request, and sends the first query task to the index node; a first index node in the plurality of index nodes determines, based on the received first query task, a target shard that is in a first data range managed by the first index node and that includes data queried by using the query request, and sends information about the target shard to the coordinator node; and the coordinator node receives information about a plurality of target shards that is sent by the plurality of index nodes, generates second query tasks for the plurality of target shards, and schedules the plurality of worker nodes to execute a query request for the plurality of target shards. In the system, the plurality of index nodes perform an index-based filtering operation in parallel, to improve data processing efficiency. In addition, if the coordinator node is faulty, index information is still available.

## Description

This application claims priority to Chinese Patent Application No. 202210657406.1, filed with the China National Intellectual Property Administration on June 10, 2022 and entitled "DATA PROCESSING SYSTEM AND APPARATUS", and claims priority to Chinese Patent Application No. 202211096488.3, filed on September 6, 2022 and entitled "DATA PROCESSING SYSTEM AND APPARATUS", both of which are incorporated herein by reference in their entireties.

### TECHNICAL FIELD

This application relates to the field of computer technologies, and in particular, to a data processing system and an apparatus.

### BACKGROUND

A database is a repository of data tables, and is used to store the data table. The data table is a common data storage form, and includes horizontal rows and vertical columns.

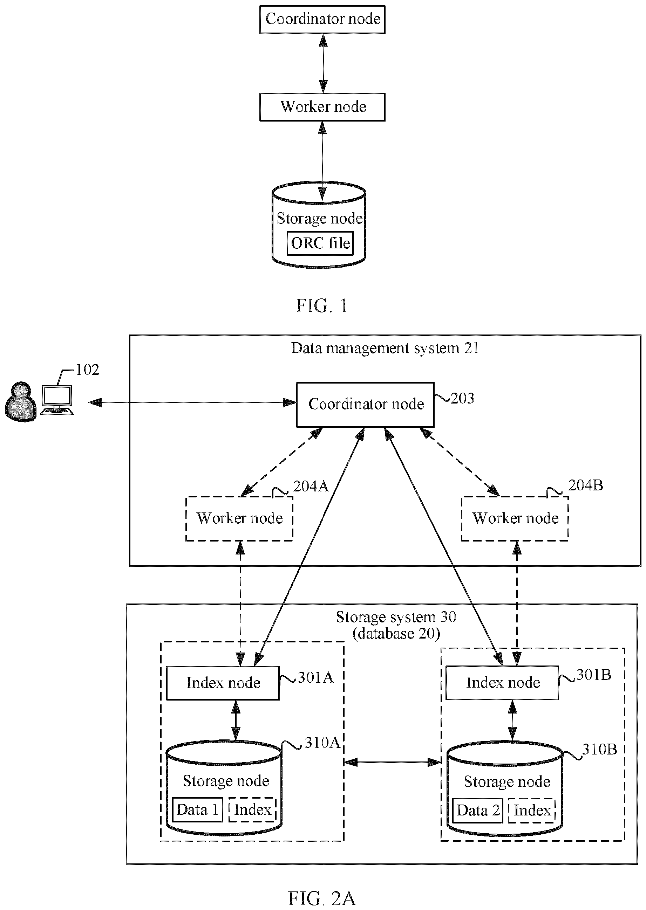

FIG. 1 is a diagram of an architecture of an existing system The system includes a coordinator node, a worker node, and a storage node. The storage node is configured to store a data table. Before a query operation, a modification operation, a deletion operation, and the like are performed on the data table, data that needs to be operated in the data table needs to be obtained. In the conventional technology, the coordinator node determines, based on an index of the data table, an area that needs to be queried in the data table, and then the coordinator node indicates the worker node to load the area into a memory for query, to obtain, from the area, the data that needs to be operated.

In the manner, the coordinator node may need to filter a large quantity of indexes, and data query efficiency is low. If the coordinator node is faulty, all indexes may be unavailable.

### SUMMARY

This application provides a data processing system, to improve index processing efficiency, so as to improve data query efficiency.

According to a first aspect, an embodiment of this application provides a data processing system. The system includes a coordinator node, a plurality of index nodes, and a plurality of worker nodes.

The coordinator node may receive a query request from a client. The query request includes information about a target object and a query condition. The target object is divided into a plurality of shards, and the plurality of shards are stored in at least one storage node.

The coordinator node generates a plurality of first query tasks based on the query request, and sends the plurality of first query tasks to the plurality of index nodes. The target object is divided into a plurality of data ranges, and each of the plurality of index nodes manages one data range of the target object. One of the plurality of index nodes is used as an example. A first index node determines, based on the received first query task, a target shard that is in a first data range managed by the first index node and that includes target data, and sends information about the target shard to the coordinator node. The target data is data that meets the query condition. The coordinator node receives information about a plurality of target shards that is sent by the plurality of index nodes, generates second query tasks for the plurality of target shards, and schedules the plurality of worker nodes to execute the plurality of second query tasks.

In the design, the coordinator node generates the plurality of first query tasks based on the query request, and sends the plurality of first query tasks to the plurality of index nodes. The plurality of index nodes perform an index-based filtering operation in parallel, to improve data processing efficiency. In addition, if the coordinator node is faulty, index information is still available. When the index node performs a filtering operation based on the index information, the index node is not affected by the coordinator node. In addition, compared with an existing solution, in the design, the system may break through an upper limit of a memory of a single node (coordinator node), and an index capability may be improved by a maximum of N times (for example, the system includes N or more index nodes).

In a possible implementation, the first index node corresponds to index information of a shard corresponding to the first data range; and when determining the target shard, the first index node is specifically configured to determine the target shard based on the index information of the shard corresponding to the first data range.

In the design, because a numerical feature of a group of data is maintained in the index information, during data query, the index node may conveniently determine, based on the index information, whether several rows of data corresponding to the shard of the target object all or partially meet the query condition, or none meets the query condition.

In a possible implementation, the target object is divided into a plurality of data blocks, each data block corresponds to one shard, the first query task includes information about a query object, and data of the target object includes data of the query object; and
when determining a target shard that is in the first data range managed by the first index node and that includes data queried by using the query request, the first index node is specifically configured to obtain at least one target data block through filtering based on index information of a data block corresponding to the query object in the first data range. The target data block is the target shard.

In the design, the plurality of index nodes perform filtering in parallel based on the index information of the data block. Compared with an existing manner in which filtering is performed based on the index information by using the coordinator node, in the design, the system can improve filtering efficiency by N times.

In a possible implementation, the target object is divided into a plurality of files, each file is divided into a plurality of data blocks, each data block corresponds to one shard, the first query task includes information about a query object, and data of the target object includes data of the query object; and
when determining a target shard that is in the first data range managed by the first index node and that includes data queried by using the query request, the first index node is specifically configured to: obtain at least one target file through filtering based on index information of a file corresponding to the target object in the first data range, where each target includes the data queried by using the query request, and obtain at least one target data block through filtering based on index information of a data block corresponding to each target file, where the target data block is the target shard.

In the design, a plurality of levels of indexes can be created, and a multi-granularity and multi-level indexing service can be provided. Based on a case in which index-based filtering efficiency can be improved when the plurality of index nodes perform filtering in parallel based on the index information, each index node may perform filtering operations at a plurality of granularities based on the plurality of levels of indexes, to reduce a quantity of read indexes and a quantity of filtering operations.

In a possible implementation, the plurality of files are grouped into a plurality of partitions, and a target partition is a partition in the plurality of partitions that includes the target shard; and
the query object includes the target partition; or
the query object includes the plurality of files corresponding to the target object; or
the query object includes at least one file corresponding to the target partition; or
the query object includes at least one file that is in the first data range and that belongs to the target object; or
the query object includes at least one file that is in the first data range and that belongs to the target partition.

In the design, the target object is divided into a plurality of partitions, and data management and storage are performed based on the partitions. The coordinator node may determine the target partition from the plurality of partitions corresponding to the target object. The target partition is a partition that meets some or all query conditions, or the target partition is a partition that includes the target shard. In this case, the index node may filter only files in the target partition, and does not need to filter all files corresponding to the target object. In this way, a range of files that need to be filtered is narrowed, to improve data query efficiency. Alternatively, the coordinator node determines a file of a target object managed by each index node, to reduce computing power overheads of the index node, and improve performance of an indexing service.

In a possible implementation, the plurality of files are grouped into a plurality of partitions, and a target partition is a partition in the plurality of partitions that includes the target shard; and
the query object includes at least one data block included in at least one file corresponding to the target object; or
the query object includes at least one data block included in at least one file corresponding to the target partition; or
the query object includes at least one data block included in at least one file that is in the first data range and that belongs to the target object; or
the query object includes at least one data block included in at least one file that is in the first data range and that belongs to the target partition.

In a possible implementation, each shard and index information corresponding to each shard are stored independently.

In the design, a data write operation is decoupled from index creation, and an index of data is created after the data is written, to shorten time required for data writing, improve data writing efficiency, and provide index creation flexibility.

In a possible implementation, a first worker node is one of the plurality of worker nodes, one data block includes a plurality of row groups, and each row group includes a plurality of data rows; and
when executing the plurality of second query tasks, the first worker node is specifically configured to: send, by the first worker node, a pushdown task to the first index node, where the pushdown task indicates to query, from the at least one target data block, data that meets the query condition; obtain, by the first index node, at least one target row group through filtering based on index information of a row group corresponding to each target data block that belongs to the first data range in one or more target data blocks, where the target row group is a row group that includes the data that meets the query condition; and read, by the first index node, data in the target row group, and obtain, through filtering, the data that meets the query condition.

In the design, the first worker node pushes down some query tasks to the first index node for processing, and the first index node determines the target row group. The first index node only needs to read the data in the target row group and filter the data in the target row group, and does not need to read or filter all row groups of the target data block, to reduce a network transmission amount and a quantity of filtering operations.

In a possible implementation, the first index node and the storage node are deployed on a same physical machine. Alternatively, the first index node and the worker node are deployed on a same physical machine.

In the design, the first index node and the storage node are deployed on a same physical machine, or the first index node and the worker node are deployed on a same physical machine, without a need to add an additional host. This may be implemented based on hardware of an existing system architecture, and there is stronger compatibility, a wider application scope, and wider applicability.

According to a second aspect, an embodiment of this application further provides a computing apparatus. The apparatus has a function of implementing the first index node in the method instance in the first aspect. For beneficial effects, refer to the descriptions in the first aspect. Details are not described herein again. The function may be implemented by hardware, or may be implemented by hardware executing corresponding software. The hardware or the software includes one or more modules corresponding to the foregoing function. In a possible design, a structure of the apparatus includes a receiving module, a processing module, and a sending module. These modules may perform corresponding functions of the first index node in the method instance in the first aspect. For details, refer to detailed descriptions in the method instance. Details are not described herein again.

According to a third aspect, this application further provides a computing apparatus. The apparatus includes a processor and a power supply circuit, the power supply circuit is configured to supply power to the processor, and the processor executes program instructions in a storage, to perform the method performed by the first index node according to any one of the first aspect or the possible implementations of the first aspect. The storage is coupled to the processor, and stores program instructions and data that are necessary for performing a data processing process.

According to a fourth aspect, this application further provides a computing device. The device includes a processor and a storage, and may further include a communication interface. The processor executes program instructions in the storage, to perform the method performed by the first index node according to any one of the first aspect or the possible implementations of the first aspect. The storage is coupled to the processor, and stores program instructions and data that are necessary for performing a data backup process. The communication interface is configured to communicate with another device, for example, receive a first query task; for another example, send a first task result.

According to a fifth aspect, this application provides a computer-readable storage medium. When the computer-readable storage medium is executed by a computing device, the computing device performs the method performed by the first index node according to any one of the first aspect or the possible implementations of the first aspect. The storage medium stores a program. The storage medium includes but is not limited to a volatile memory, for example, a random access memory, or a nonvolatile memory, for example, a flash memory, a hard disk drive (hard disk drive, HDD), or a solid state drive (solid state drive, SSD).

According to a sixth aspect, this application provides a computing device program product. The computing device program product includes computer instructions, and when the computing device program product is executed by a computing device, the computing device performs the method performed by the first index node according to any one of the first aspect or the possible implementations of the first aspect. The computer program product may be a software installation package. When the method provided in any one of the first aspect or the possible implementations of the first aspect needs to be used, the computer program product may be downloaded and executed by the computing device.

According to a seventh aspect, this application further provides a chip. The chip is configured to execute a software program, to implement the method according to the first index node according to the first aspect or the possible implementations of the first aspect.

For beneficial effects of any implementation of the second aspect to the seventh aspect, refer to the descriptions in the first aspect. Details are not described herein again.

### BRIEF DESCRIPTION OF DRAWINGS

FIG. 1 is a schematic diagram of a system architecture;
FIG. 2A is a schematic diagram of a first possible system architecture according to an embodiment of this application;
FIG. 2B is a schematic diagram of a second possible system architecture according to an embodiment of this application;
FIG. 2C is a schematic diagram of a third possible system architecture according to an embodiment of this application;
FIG. 3 is a schematic diagram of an architecture of a file system according to an embodiment of this application;
FIG. 4 is a schematic diagram of a structure of an ORC file;
FIG. 5 is a schematic diagram of an index creation procedure according to an embodiment of this application;
FIG. 6 is a schematic diagram of an index level according to an embodiment of this application;
FIG. 7 is a schematic flowchart of a data processing method according to an embodiment of this application;
FIG. 8 is a schematic diagram of a structure of a computing apparatus according to an embodiment of this application; and
FIG. 9 is a schematic diagram of a structure of a computing device according to an embodiment of this application.

### DESCRIPTION OF EMBODIMENTS

For ease of understanding, some technical terms in embodiments of this application are first explained and described.
(1) A data table is a set of a series of two-dimensional arrays, and includes a vertical column and a horizontal row. The column includes information of a same type, each column is also referred to as a field, and a title of each column is referred to as a field name. A row includes several columns of information items, and a row of data is referred to as a record. For example, a sales table (as shown in Table 1) includes columns such as a commodity identifier, a sales volume, and a sales date. The commodity identifier, the sales volume, and the sales date each are a field name. One row of data in the sales table is one record, and one record includes one commodity identifier, one sales volume, and one sales date. Table 1 lists some records of a sales table as an example.

**Table 1. saleTbl**

| ID (commodity ID) | Sales volume (sales volume) | Date (date) |
|---|---|---|
| 1 | 100 | July 17, 2022 |
| 2 | 150 | July 17, 2022 |
| 1 | 100 | July 17, 2022 |
| 3 | 200 | July 18, 2022 |
| ... | ... | ... |

(2) An index of a table is used to store a statistical feature (or a numerical feature) of data in the table. For example, an index of a min/max type is mainly used to store a maximum value (max) and a minimum value (min), in a specified column, of a record included in a storage area in the table.
(3) A file system is a structured data file storage and organization form. All data in a computer is 0 and 1. A series of combinations of 0 and 1 stored on a hardware medium cannot be distinguished or managed. Therefore, a concept of "file" is used to organize the data. Data for a same purpose forms different types of files in structure manners required by different applications. Usually, different suffixes are used to represent different types. Then, a name that is easy to understand and remember is provided for each file in this application. However, when there are a large quantity of files, in this application, these files are grouped in a specific grouping manner, and each group of files are placed in a same directory (or referred to as a folder). In addition to the files, the directory may include a lower-level directory (which is referred to as a subdirectory or a subfolder). All files and directories form a tree structure. The tree structure has a special name: file system (File System). There are many types of file systems, and common file systems are FAT/FAT32/NTFS in Windows, EXT2/EXT3/EXT4/XFS/BtrFS in Linux, and the like. To facilitate a search, in level-by-level descending order of directories from a root node to the files, names of a directory, a subdirectory, and a file are combined with special characters (for example, "\" is used in Windows/DOS, and "/" is used in a Unix-like system), and such a string of characters is referred to as a file path, for example, "/etc/systemd/system.conf" in Linux or "C:\Windows\System32\taskmgr.exe" in Windows. A path is a unique identifier for accessing a specific file. For example, D:\data\file.exe in Windows is a path of a file, and indicates a file.exe file in a data directory in a partition D.

FIG. 2A is a diagram of an architecture of a system to which an embodiment of this application may be applied.

The system includes a data management system 21 and a database 20. The database 20 is a data set organized, described, and stored based on a specific mathematical model. For example, the database 20 may include one or more data tables (which are briefly referred to as "tables"). The data management system 21 is configured to establish, use, and maintain the database 20.

A client 102 may include any type of hardware device or application that is configured to interact with the data management system 21. For example, the hardware device may be a device deployed on a user side, for example, an application server, a desktop computer, a notebook computer, a mobile phone, or an iPad. A user may send a request, for example, a query request (for example, an SQL query), to the data management system 21 by operating the client 102, to request to query, from a table, data that meets a query condition.

The data management system 21 supports a structured query language (Structured Query Language, SQL). Usually, the SQL is a dedicated programming language dedicated for managing data stored in the relational database 20. The SQL may be any type of data-related language, including, for example, a data definition language and a data manipulation language. A range of the SQL may include data insertion, query, updating, and deletion, mode creation and modification, and data access control.

A query (query) is to request to view, access, and/or manipulate data stored in the database 20. As described above, the data management system 21 may receive a query request (also referred to as an SQL query) in an SQL format from the client 102. Usually, the data management system 21 receives the query request from the client 102 through a communication interface, for example, an application programming interface (API) or network interfaces such as an Ethernet interface, accesses related data from the database 20, manipulates the related data to generate a query result corresponding to the query request, and returns the query result to the client 102 through the communication interface.

In an example, as shown in FIG. 2A, the data management system 21 includes at least one coordinator node (for clarity, FIG. 2A shows only one coordinator node 203, but a quantity of coordinator nodes is not limited in this application), a plurality of index nodes (FIG. 2A shows only two index nodes 301A and 301B, but a quantity of index nodes is not limited in this application), and a plurality of worker nodes (for clarity, FIG. 2A shows two worker nodes 204A and 204B, but a quantity of worker nodes is not limited in this application). Because structures and functions of all index nodes are basically the same, and structures and functions of all worker nodes are basically the same, for ease of description, the following provides descriptions by using the index node 301A and the worker node 204A as an example.
(1) The coordinator node 203 may be configured to: perform syntax and semantic parsing on the query request submitted by the client 102, and generate, for the query request, a group of execution plans that may be used. The execution plan may include an execution plan in a scheduling stage and an execution plan in an execution stage. The execution plan in the scheduling stage indicates a plurality of coordinator nodes that execute a first query task (for example, an index query task), and an index query task that needs to be executed by each coordinator node. The execution plan in the execution stage indicates a plurality of worker nodes that execute a plurality of second query tasks (for example, data query tasks), and a data query task that needs to be executed by each worker node. An execution plan of an execution node may be generated after the index node completes the index query task.

The coordinator node 203 may be a worker node selected by each worker node from the worker nodes, and is enabled to assume a function of the coordinator node. Alternatively, the coordinator node 203 may be a specific device. In addition, when a plurality of coordinator nodes 203 exist in the data management system 21, one query request sent by the client 102 is routed to one of the plurality of coordinator nodes 203. In this way, the data management system 21 (the plurality of coordinator nodes 203) may simultaneously respond to a plurality of query requests, and the plurality of query requests may be from one or more clients 102.

(2) The index node 301A may be configured to provide an indexing service, for example, create, delete, update, or query an index. In this embodiment, the index node 301A and the index node 301B may be configured to perform an index creation method and a data processing method that are provided in this application, for example, configured to perform the index query task.

(3) The worker node 204A may be configured to execute a data query task. For example, the worker node 204A obtains, from the database 20, data indicated by the data query task, performs various computing processing, or the like on the obtained data, to generate a query result, and returns the query result to the coordinator node 203. The query result is finally returned by the coordinator node 203 to the client 102.

The coordinator node, the index node, and the worker node each may be implemented by software, or may be implemented by hardware. For example, the following describe a timing manner of the index node 301A by using the index node 301A as an example. Similarly, for a timing manner of the coordinator node and a timing manner of the worker node, refer to an implementation of the index node 301A.

The index node 301A may be implemented by software (for example, a process or an application), or may be implemented by hardware. When the index node 301A is implemented by software, the index node 301Amay include code running on a computing instance. The computing instance may be at least one of computing devices such as a physical host (a computing device, for example, a server), a virtual machine, and a container. When the index node 301A is implemented by hardware, the index node 301A may alternatively be a device that is implemented by using an ASIC or a PLD, or the like. The PLD may be implemented by a CPLD, an FPGA, GAL, or any combination thereof.

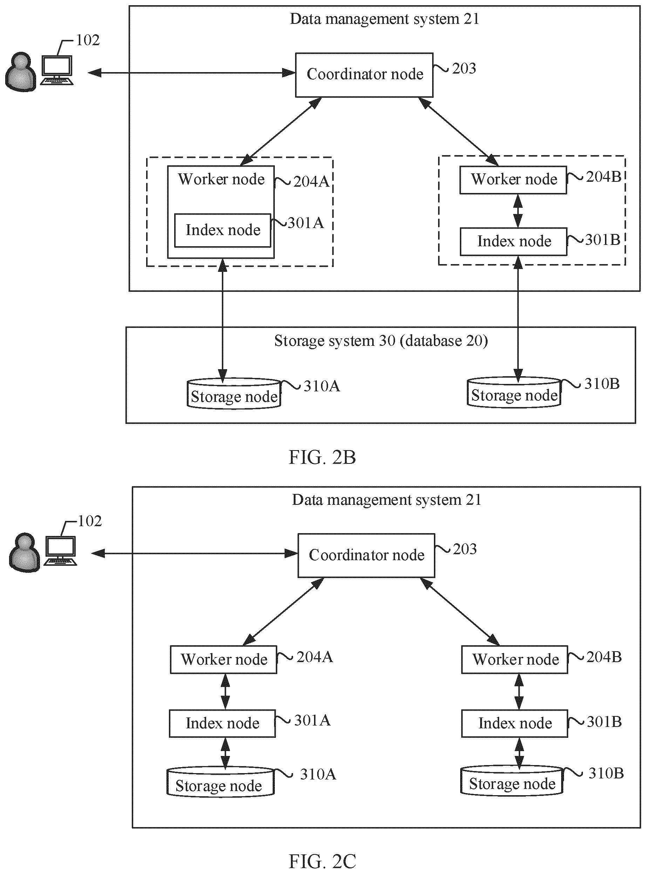

To be compatible with an existing system hardware architecture, the index node 301A and a storage node 310A may be deployed in a same physical host (as shown in FIG. 2A), or the index node 301A and the worker node 204A are deployed in a same physical host (as shown in FIG. 2B). Alternatively, the index node 301A may be deployed in an independent physical host.

The following describes a storage system 30.

One or more databases may be established in the storage system 30, and the one or more databases include a database 20. FIG. 2A is an example schematic diagram of a structure of a storage system 30. The storage system 30 includes a plurality of storage nodes (for clarity, FIG. 2A shows two storage nodes 310A and 310B, but this is not limited in this application). Structures of all storage nodes are basically the same. The following provides descriptions by using the storage node 310A as an example.

The storage node 310A is configured to store data, for example, data in a table in the database 20. The storage node 310A may be a device having a data processing capability and a data storage capability, for example, a server, a desktop computer, or a storage array.

A file system such as a Hadoop distributed file system (hadoop distributed file system, HDFS) may be deployed in the storage system 30. Therefore, a table is usually split into a plurality of files and stored in one or more storage nodes. In other words, the storage node may store received data of the table as one file, or split received data of the table into a plurality of files of a proper size, for ease of management and reading. Each file includes a plurality of records in a same table, and each file includes a different record. A file format may be an ORC (Optimized Row Columnar) file, a parquet file, or the like.

For example, it is assumed that a sales table shown in Table 1 is split into a file 0 to a file 9. The file 0 includes a 1^{st} record to a 1500^{th} record in Table 1, a file 1 includes a 1501^{st} record to a 2500^{th} record in the sales table, a file 2 includes a 2001^{st} record to a 2500^{th} record in the sales table, and so on. The plurality of files may be stored in one storage node, or the plurality of files are stored in a plurality of storage nodes. For example, the file 0 to a file 4 are written into the storage node 310A, and a file 5 to the file 9 are written into the storage node 310B. In this way, a plurality of files can be written in parallel into the plurality of storage nodes, and a plurality of files can be written in parallel in each storage node, to improve data writing efficiency. It should be noted that, sales dates in each file are mixed. For example, in the file 0 (as shown in Table 1), sales dates in a 1^{st} record to a 3^{rd} record are July 17, 2022, and a sales date in a 4^{th} record is July 18, 2022.

For ease of management, in this application, the table may alternatively be further divided into a plurality of partitions based on a specific rule. For example, Table 1 is divided into a plurality of partitions based on sales dates, and each partition represents a sales date. For example, a partition 0 represents a sales date July 17, 2022, and a partition 1 represents a sales date July 18, 2022. The plurality of partitions may be read separately, to improve query efficiency. It can be understood that, Table 1 is divided into a plurality of partition tables, sales dates in different partition tables are different, and sales dates in all records in each partition table are a same day. When a client 102 requests to query a sales record of a day, a data management system 21 needs to query only a partition table of the day, to improve query efficiency.

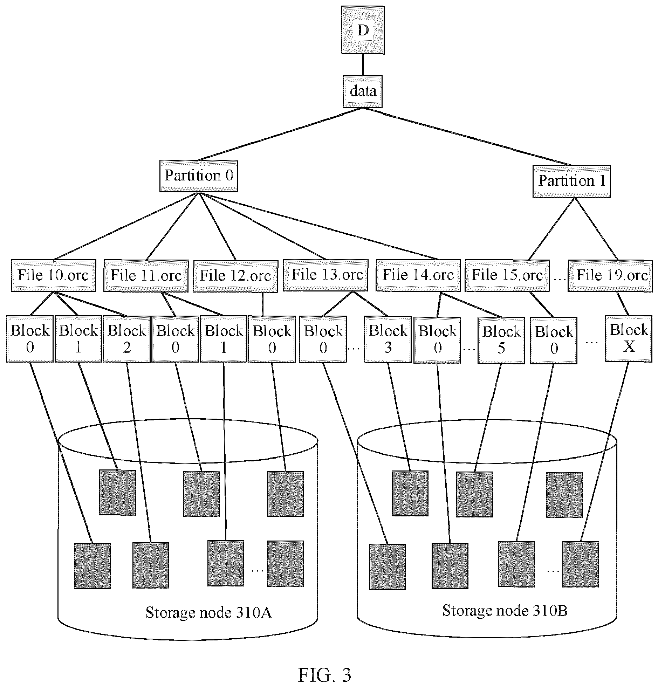

Similarly, all records in a partition table may be split into one or more files. In the file system, compared with a non-partition table, the partition table has only one more layer of directory indicating a partition. Files in a same partition are all placed in a directory indicating the partition. FIG. 3 shows a file system directory of a partition table. For example, sales dates in files (for example, a file 10 to a file 14 in FIG. 3) stored in a folder of a partition 0 are all July 17, 2022, and sales dates in files (for example, a file 15 to a file 19 in FIG. 3) stored in a folder of a partition 1 are all July 18, 2022. As shown in FIG. 3, a layer of directory pointing to a partition is added to a file corresponding to Table 1. For example, a file path of the file 10 is D:\data\partition0\file10.orc.

The file system may be further responsible for allocating logical storage space to all data. An allocation unit of database space is a data block (stripe), which is also referred to as a logical block. The data block is a minimum storage unit in the file system. One file may include one or more data blocks. One data block corresponds to physical space with several bytes or megabytes in a disk. It should be noted that the data block herein is different from a block in a block device. The block in the block device is usually a segment of 512 B or 4 K physical storage space (for example, a sector). The data block in this embodiment is a logical block whose size may be specified. For example, in the HDFS, a default value (that is, a default value) of a size of a data block is 64 MB. Assuming that a size of the file 10 is 192 MB, the file 10 may be split into three blocks, for example, a block 0 to a block 2. For example, it is assumed that the file 10 includes 1500 records, the block 0 may include a 1^{st} record to a 500^{th} record in the file 10, a block 1 includes a 501^{st} record to a 1000^{th} record in the file 10, and the block 2 includes a 1001^{st} record to a 1500^{th} record in the file 10.

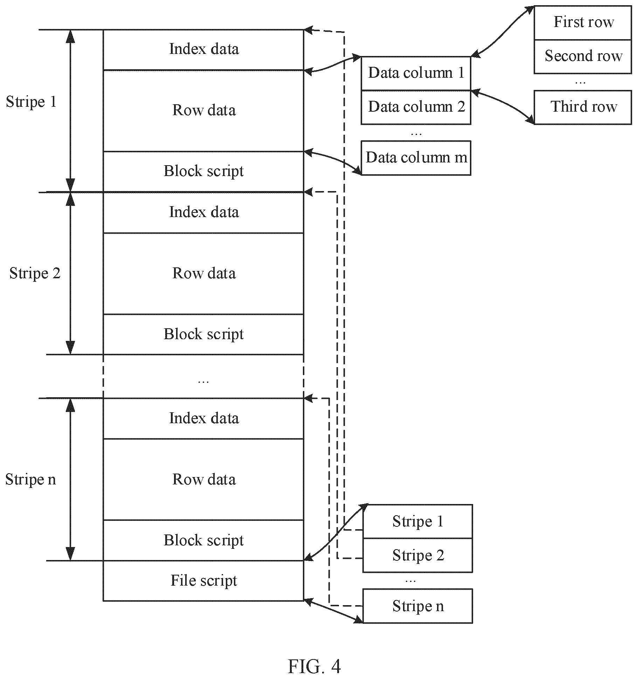

In a column store database, data in each block is stored in a column, and the column is referred to as a data column. FIG. 4 is a schematic diagram of a format of an ORC file in a column store database. It is assumed that the ORC file is the file 10. The block 0 is used as an example. An index data part includes a row group index corresponding to a data column in row data. The row data is a data part, and includes a plurality of data columns. For example, Table 1 is used as an example. A column 1 indicates a commodity identifier column of Table 1, and includes a plurality of rows of data in the commodity identifier column; and colum1 indicates a sales volume column of Table 1, and includes a plurality of rows of data in the sales volume column. As described above, the block 0 may include the 1^{st} record to the 500^{th} record in the file 10. In other words, in the block 0, each data column includes 500 rows of data. A block script includes an offset of each row group in a data block, and indicates a start address of each row group. A file script includes an offset of each data block in a file. For details, refer to descriptions of an existing structure of the ORC file. Details are not described herein.

It should be noted that the size of the data block is merely an example, and the data block may have different sizes in different file systems. In this embodiment, the size of the data block may be further set. In addition, a quantity of records in a table that are included in each data block is merely an example. This is not limited in this application. In addition, it should be noted that, the storage system 30 shown in FIG. 2A is a distributed storage system. The storage system 30 applicable to this embodiment of this application may be a centralized storage system. Any storage system that can store a database is applicable to this embodiment of this application.

The foregoing describes how to store a table in the storage system 30. It should be noted that, in addition to storing data in the table, the storage node may be configured to store an index of the data in the table, metadata (for example, a mapping relationship between a table and a partition/file) of the data in the table, metadata of an index node (which is described below and is not described herein), and the like. This is not specifically limited.

FIG. 2A and FIG. 2B each show a system architecture in which storage and computing are separated. This embodiment of this application is further applicable to a system architecture in which storage and computing are integrated. For details, refer to FIG. 2C. In a system shown in FIG. 2C, a worker node, an index node, and a storage node may be deployed in a same data center or in a same equipment room. The worker node, the index node, and the storage node may be deployed in different physical hosts, or any two or three nodes in the worker nodes, the index node, and the storage node are deployed in a same physical host.

It should be noted that systems shown in FIG. 2A, FIG. 2B, and FIG. 2C are merely examples. A system to which this embodiment of this application is applicable may have more or fewer components than the foregoing system architecture. This is not limited in this application.

This application provides an index creation method. In the method, table data and an index of the table data are separately stored, to improve table data writing efficiency. Further, a coordinator node indicates a plurality of index nodes to create indexes for the table data, to improve index creation efficiency.

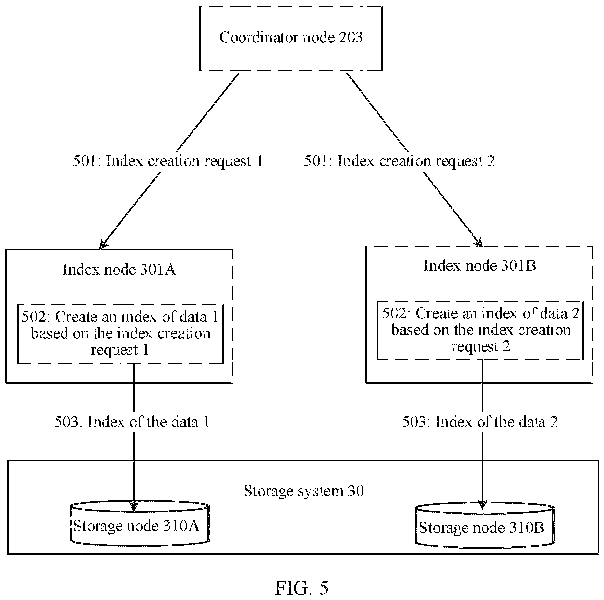

With reference to FIG. 5, the following describes the index creation method by using an example in which the index creation method provided in this embodiment of this application is applied to the system shown in FIG. 2A. For ease of description, the method is performed by the coordinator node 203, the index node 301A, and the index node 301B in FIG. 2A.

As shown in FIG. 5, the method may include the following steps.

Step 501: The coordinator node 203 sends index creation requests to a plurality of index nodes.

The index creation request is used to request to create an index for specified data.

In an implementation, the specified data may be data stored in a storage system 30. After data in Table 1 is stored in the storage system 30, the coordinator node 203 indicates the plurality of index nodes to create indexes for the data in Table 1.

In another implementation, the specified data may alternatively be data that is being written into a storage system 30. For example, in a process in which data in Table 1 is written into the storage system 30, the coordinator node 203 indicates the plurality of index nodes to create indexes for the data in Table 1.

It should be noted that, when data in a table is written into a storage node, the storage node may store the data in the table as one or more files, for example, ORC files or parquet files. The ORC file is used as an example. Currently, when the data in the table is written into the ORC file, the data in the table and an index of the table are usually written into a same file. As shown in FIG. 4, index data represents an index part, including the index of the table. In this embodiment, during writing into the ORC file, that only the data in the table is written but the index is not written is supported. In other words, the data and the index are separately stored. After the data in the table is written, the coordinator node 203 indicates the plurality of index nodes to create indexes for stored data in the table. Alternatively, in a process in which the data in the table is written into the storage node, the coordinator node 203 indicates the plurality of index nodes to create indexes for the data in the table.

Step 501 may be actively initiated by the coordinator node 203. For example, after it is detected that a sales table shown in Table 1 is written into the storage system 30, or when data in Table 1 is being written into the storage system 30, the coordinator node 203 generates a plurality of index creation requests for Table 1, to create indexes for Table 1. Alternatively, step 501 may be triggered by a client 102. For example, the client 102 first sends a first index creation request (create index) to the coordinator node 203. The first index creation request requests to create an index for a target object (for example, Table 1). After receiving the first index creation request, the coordinator node 203 generates a plurality of second index creation requests based on the first index creation request. Each second index creation request is used to create an index for some data in the target object, and different second index creation requests are used to create indexes for different data. It can be understood that, the coordinator node 203 indicates different index nodes to create indexes for different data in a same target object. In this way, a plurality of index nodes 301 create indexes for data in parallel, to improve index creation efficiency.

Refer to FIG. 5. The coordinator node 203 respectively sends an index creation request 1 and an index creation request 2 to the index node 301A and the index node 301B. For example, the index creation request 1 requests to create an index of data 1, and the index creation request 2 requests to create an index of data 2. For example, if the target object is Table 1, it may be understood with reference to FIG. 3 that the index creation request 1 requests to create an index for a file 10, and the index creation request 2 requests to create an index for a file 11. For another example, the index creation request 1 requests to create indexes for the file 10 to a file 14, and the index creation request 2 requests to create indexes for a file 15 to a file 19. The data 1 and the data 2 may be stored in a same storage node, or may be stored in different storage nodes. In addition, data volumes of the data 1 and the data 2 are not limited.

For example, the index creation request may include one or more of the following: data indication information and index indication information.
(1) The data indication information indicates the specified data, that is, data for which an index is to be created.

For example, the data indication information may include one or more pieces of information such as a file path, a file handle, a start address (or an offset of the specified data in a file), a data length, and a data column name (that is, a field name) of the specified data. For example, when the specified data is the file 10, a corresponding index creation request may include a file path of the file 10. For another example, when the specified data is a block 0 in the file 10, the index creation request may include a file path of the file 10, a start address (for example, 0) of the block 0 in the file 10, and a length (for example, 64 M) of the block 0. For another example, if the specified data is a block 1 and a block 2 in the file 10, the index creation request may include a file path of the file 10, a start address (for example, 64 M) of the block 1 in the file 10, and a total length (for example, 128 M) of the block 1 and the block 2. For another example, the specified data is a sales volume column in the file 10, and the index creation request includes a file path of the file 10 and a field name of the sales volume column.

It should be noted that, the foregoing is merely some examples. The data indication information in this embodiment may further include other information, for example, information about a storage node in which the specified data is located and a table name. Content included in the data indication information is not limited in this application.

(2) The index indication information includes one or more of the following: an index level and an index type.

As described above, in a column store database, one index indicates a numerical feature of one data column in several rows of records, and there are a plurality of index types. Detailed descriptions are provided below.

In this embodiment of this application, a plurality of levels of indexes can be created, and different levels of indexes correspond to different data granularities. In other words, in this application, indexes of data may be generated at different data granularities. For example, data corresponds to a first level and a second level, data at the first level includes data at the second level, the first level includes a plurality of data objects (denoted as first data objects) obtained through division at a first granularity, the second level includes a plurality of data objects (denoted as second data objects) obtained through division at a second granularity, and each first data object may include one or more second data objects. In this example, a first granularity index and a second granularity index can be generated in this application. The first granularity index is an index corresponding to the first data object, and the second granularity index is an index corresponding to the second data object. Certainly, a third level, a third granularity index, a fourth level index, a fourth granularity index, and the like may be further included. The index level is not limited in this application.

For example, the index level in this embodiment includes but is not limited to a file-level index (briefly referred to as a file index), a data block-level index (briefly referred to as a block index), and a row group-level index (briefly referred to as a row group index). Usually, one file includes one or more blocks, one block includes a plurality of row groups, and one row group includes a plurality of rows of data. In this application, (1) one or more file indexes may be generated based on one file. A plurality of file indexes may belong to different data columns, and one file index is an index of one data column in the file, and indicates a numerical feature of the data column in the file. Alternatively, a plurality of file indexes are different types of indexes corresponding to a same data column in the file. (2) One or more block indexes may be generated based on one block, and one block index is an index of one data column in one block, and indicates a numerical feature of the data column in the block. Alternatively, a plurality of block indexes are different types of indexes corresponding to a same data column in the data block. (3) One or more row group indexes may be generated for one row group, and one row group index is an index of one data column in the row group, and indicates a numerical feature of the data column in the row group. Alternatively, a plurality of row group indexes are different types of indexes corresponding to a same data column in the row group. The row group index is a minimum unit for creating an index. This is described below.

In this application, the first granularity index may be a file index, the second granularity index may be a block index, and the third granularity index may be a row group index; or the first granularity index may be a partition index, the second granularity index may be a file index, the third granularity index may be a block index, and the fourth granularity index may be a row group index. For ease of description, the following provides descriptions by using an example in which the first granularity index is a file index, the second granularity index is a block index, and the third granularity index is a row group index. In the following, the file index may be replaced with the first granularity index, the block index may be replaced with the second granularity index, and the row group index may be replaced with the third granularity index.

The index type includes but is not limited to: min/max (minimum value/maximum value), bloom (bloom), btree (btree), bitmap (bitmap), sum (sum), count (count), and the like. This is not specifically limited. Herein, min/max indicates a minimum value or a maximum value of a data column, bloom indicates a fixed value in the data column, btree indicates a distribution feature of a data range in the data column, sum indicates a sum in the data column, and count indicates a count of a data item in the data column. One or more indexes of different types may be created for a same data column. For example, the sales volume column includes a min/max index, used to record a minimum value and a maximum value in the sales volume column; may further include a bloom index, used to record a fixed value in a data column; and may further include a sum index, used to record a sales volume sum in the sales volume column; and the like.

In other words, in this embodiment, one index creation request may request to create one or more levels of indexes corresponding to data, and each level of index may include one or more indexes of different types. For example, the index creation request requests to create a file index, a block index, and a row group index that correspond to the sales volume column in the file 10. Each level of index may include min/max, bloom, and the like. In other words, the file index includes a min/max index and a bloom index in the sales volume column in the file 10, the block index includes a min/max index and a bloom index in a sales volume column in a block, and the row group index includes a min/max index and a bloom index in a sales volume column in a row group. In this application, specific index levels and index types that need to be specifically created may be further specified by a user. In this case, information such as the index level and the index type may be carried in the index creation request.

In this embodiment, each index node corresponds to a data range of the target object, and is responsible for managing an index corresponding to data in the data range. In other words, the index node is responsible for creating the index for the data in the data range corresponding to the index node.

A correspondence between an index node and a data range is included in metadata of the index node. The metadata of the index node may be stored in the storage node or the index node, or stored in another storage device. Any device that can store data may be configured to store the metadata of the index node. It should be noted that, metadata of data and the metadata of the index node in this embodiment include different content.

In this embodiment, the index creation requests sent by the coordinator node 203 to the plurality of index nodes may be the same or may be different.

For example, a process of generating the index creation request may include: (1) The coordinator node 203 obtains metadata of the target object (for example, the sales table). The metadata includes a mapping relationship between the target object and a partition/file and metadata of each of the plurality of index nodes (the index node 301A and the index node 301B). (2) The coordinator node 203 generates an index creation request corresponding to each index node based on the metadata of the target object and the metadata of each index node. Data indicated in the index creation request corresponding to the index node is the data in the data range corresponding to the index node. For example, a data range corresponding to the index node 301A includes the file 10, and a data range corresponding to the index node 301B includes the file 11. This is merely an example. A unit of the data range is not limited in this application. For example, the data range may be measured by using a data block. The index creation request 1 may request to create an index for the file 10, and correspondingly, the index creation request 1 may include data indication information that indicates the file 10. The index creation request 2 may request to create an index for the file 11, and correspondingly, the index creation request 2 may include data indication information that indicates the file 11. It can be learned that, in this example, the index creation requests sent by the coordinator node 203 to different index nodes are different.

For another example, the index creation requests sent by the coordinator node 203 to different index nodes may alternatively be the same. For example, the index creation request may include a name of the target object, for example, a table name. The index creation request indicates an index node to create an index of data that is in a data range corresponding to the index node and that belongs to the target object. The index node determines, based on the metadata of the index node, data that is of the target object and for which an index is to be created (detailed descriptions are provided below, and details are not described herein). In this case, the index creation requests sent by the coordinator node 203 to different index nodes are the same.

It should be noted that the index creation request in any one of the foregoing implementations may further include the index indication information, or may not carry the index indication information. In this case, an index level and an index type of a to-be-created index may be a default value (that is, a default value).

Step 502: After receiving the index creation request, each of the plurality of index nodes creates the index of the specified data based on the index creation request.

It is assumed that the index node 301A receives the index creation request 1, the index creation request 1 requests to create the file index, the block index, and the row group index that correspond to the sales volume column in the file 10, and the index type is min/max. When no data column is specified, if the file 10 includes a plurality of data columns, the index node may create a corresponding index for each data column. The index node 301B receives the index creation request 2, the index creation request 2 requests to create a file index, a block index, and a row group index that correspond to a sales volume column in the file 11, and the index type is also min/max.

The following describes, by using the sales volume column in the file 10 as an example, a process of creating the row group index, the block index, and the file index of the sales volume column in the file 10.

### (1) Row group index

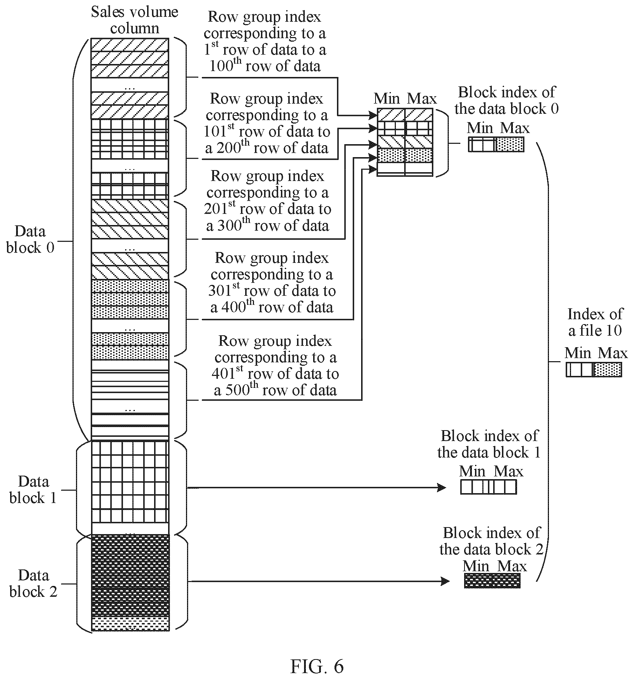

With reference to FIG. 3, it is assumed that the file 10 includes the block 0 to the block 2. The block 0 is used as an example. As shown in FIG. 6, it is assumed that the block 0 includes 500 rows of data in the sales volume column, and it is assumed that one row group includes 100 rows of data. In other words, in the 500 rows of data included in the sales volume column in the block 0, every 100 rows of data correspond to one row group index. As shown in FIG. 6, row group indexes corresponding to the sales volume column in the block 0 include five row group index items, and a minimum value and a maximum value in 100 rows of data corresponding to each row group index item are recorded in each row group index item.

### (2) Block index

The block 0 is still used as an example. As shown in FIG. 6, a block index corresponding to the sales volume column in the block 0 records a minimum value and a maximum value in 500 rows of data corresponding to the sales volume column in the block 0. For example, the index node 301A may directly determine the minimum value and the maximum value in the 500 rows of data included in the sales volume column in the block 0, to determine the block index corresponding to the sales volume column in the block 0. For another example, the index node 301A may determine the block index based on all row group index items in the row group indexes corresponding to the sales volume column in the block 0. As shown in FIG. 6, the minimum value and the maximum value in the block index corresponding to the sales volume column in the block 0 are a minimum value and a maximum value in the five row group index items corresponding to the sales volume column in the block 0.

### (3) File index

Still refer to FIG. 6. A file index corresponding to the sales volume column in the file 10 records a minimum value and a maximum value in 1500 rows of data corresponding to the sales volume column in the file 10. For example, the index node may directly determine the minimum value and the maximum value in the 1500 rows of data in the sales volume column in the file 10, to determine the file index. For another example, the index node 301A may alternatively determine the file index based on a block index 0 (an index corresponding to the sales volume column in the block 0), a block index 1 (an index corresponding to a sales volume column in the block 1), and a block index 2 (an index corresponding to a sales volume column in the block 2) that correspond to the file 10.

In this case, the index node 301A completes creation of the index of the specified data. A manner in which the index node 301B creates an index is the same as a manner in which the index node 301A creates an index. Details are not described herein again.

The foregoing sequence of creating the plurality of levels of indexes is merely an example. This is not limited in this embodiment of this application. In addition, the index creation request includes the data indication information. When the index creation request does not include the data indication information, the index node may perform operations of the coordinator node 203, for example, obtain the metadata of the index node, and determine, based on the metadata of the index node, data for which an index is to be created, that is, the data in the data range corresponding to the index node. For details, refer to the foregoing descriptions. Details are not described herein again.

In an optional implementation, to avoid repeatedly creating an index, before creating an index of data, the index node may detect whether the index of the data exists; if the index exists, the index node compares a timestamp (indicating a last modification time point of the data) of the data and a timestamp (indicating a creation time point of an index) of a created index; and if the timestamp of the data is later than the timestamp of the index, that is, the data is updated or modified after the index is created, the index node creates a new index of the data and deletes an old index (that is, the created index). If the timestamp of the data is earlier than the timestamp of the index or is the same as the timestamp of the index, the index node does not need to repeatedly create a new index, and retains the old index.

Step 503: Each of the plurality of index nodes 301 stores the created index.

Each index node writes an index created by the index node into a storage for persistent storage. The storage may be a storage of the index node, for example, a magnetic disk or a hard disk, or a storage of a storage node or another node, for example, a third-party storage device. This is not specifically limited.

For example, the index is stored in the storage system 30. Physical storage space used to store data in the storage system 30 is separated from physical storage space used to store an index. For example, if each storage node in the storage system 30 includes four storage units (for example, a storage unit A to a storage unit D), each storage unit may be a segment of logical address space. Usually, an index occupies smaller storage space than data. Therefore, it may be set that the storage unit A to a storage unit C in each storage node 310 in the storage system 30 are used to store data, and the storage unit D in each storage node is used to store an index. In this case, the index node may store data and an index of the data in a same storage node 310. In other words, the index node writes the index of the data into a storage node used to store the data. For another example, if the storage system 30 includes four storage nodes (for example, a storage node 1 to a storage node 4), it may be set that all storage units in the storage node 1 to a storage node 3 are used to store data, and all storage units in the storage node 4 are used to store an index. In this embodiment of this application, a storage unit used to store data is essentially the same as a storage unit used to store metadata, but content stored in the storage units is different. In brief, separate storage may be understood as that data and an index of the data are stored in independent files, and a data file and an index file may be stored in a same storage node, or may be stored in different storage nodes.

It should be noted that, in this embodiment, an index creation procedure (for example, step 501) may be triggered after the data of the target object (for example, Table 1) is written into the storage node. In other words, in this embodiment, a data write operation may be performed before an index is created for the data. Alternatively, in this embodiment, an index may be created for data that is being written into the storage node. In other words, the index is created when a write operation is being performed. However, it should be understood that, in this embodiment, the data write operation and an index creation operation are two independent procedures, and the data write operation is not affected by the index creation operation.

In the design, the coordinator node 203 distributes a plurality of index creation requests to the plurality of index nodes 301, and the plurality of index nodes create indexes in parallel to improve index creation efficiency, to avoid a problem in the conventional technology that an entire system is unstable or even unavailable because the coordinator node 203 is faulty, a memory/disk of the coordinator node 203 is insufficient, a quantity of index creation requests from the client 102 is large, or the like. In addition, in the method, the data write operation may be further decoupled from index creation, and an index of data is created after the data is written, to shorten time required for data writing, improve data writing efficiency, and provide index creation flexibility. Further, in this embodiment of this application, a plurality of levels of indexes can be created, and a multi-granularity and multi-level indexing service can be provided.

The foregoing describes the index creation procedure.

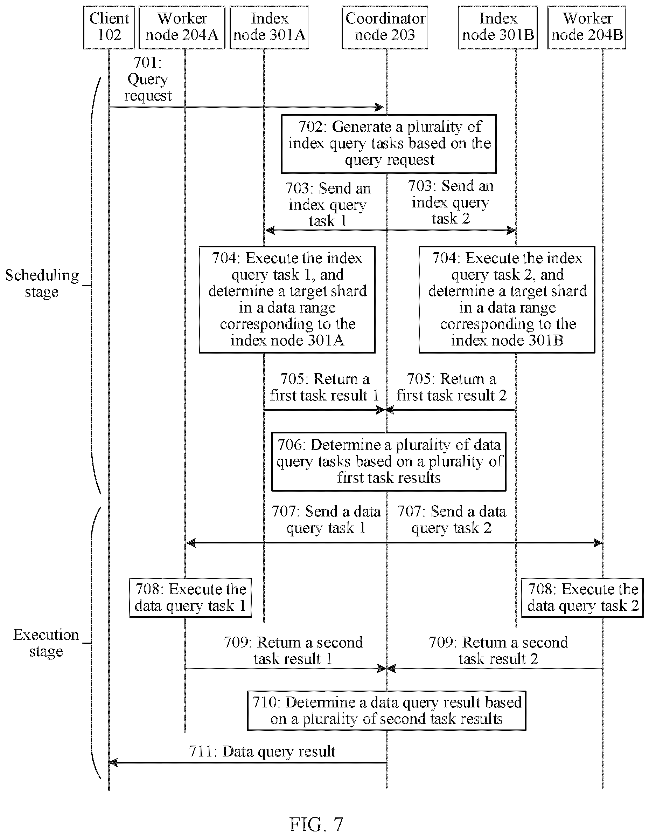

With reference to FIG. 7, the following describes in detail a data processing method provided in embodiments of this application by using an example in which the data processing method provided in embodiments of this application is applied to any system shown in FIG. 2A and FIG. 2B. The data processing method includes two stages: a scheduling stage and an execution stage. In the scheduling stage, a plurality of index nodes determine a target shard in a target object in parallel by using an index. The target shard includes data that meets a query condition. In the execution stage, a worker node obtains, from the target shard, the data that meets the query condition, and performs a series of operations on the data. For ease of description, that the method is performed by the coordinator node 203, the index node 301A, and the index node 301B in FIG. 2A is used as an example.

As shown in FIG. 7, the method may include the following steps.

Step 701: A client 102 sends a query request to the coordinator node 203.

For example, the query request may include information about the target object and the query condition, and is used to request to search data of the target object for the data (denoted as target data) that meets the query condition. The target object may be a table (the information about the target object may be a table name), a file (the information about the target object may be a file path, a file handle, or the like), or the like. This is not specifically limited.

Step 702: The coordinator node 203 generates a plurality of first query tasks (for example, index query tasks) based on the received query request.

For example, the coordinator node 203 performs syntax and semantic parsing on the query request, to obtain parsed information. For example, the parsed information includes the target object and the query condition that are indicated by the query request. The coordinator node 203 generates the index query task based on the parsed information (for example, the target object and the query condition).

For example, it is assumed that the query request is an SQL statement, and the SQL statement includes:
SELECT saleTbl.ID
FROM saleTbl
WHERE *saleTbl .date*='20220717'
AND saleTbl .sales>='300'

The query request is used to request to query, from Table 1 (a name of Table 1 is *saleTbl*), a commodity whose sales date is July 17, 2022 and whose sales volume is greater than 300. Based on syntax and semantic parsing, it can be learned that the target object is Table 1, and the query condition is that the sales date is July 17, 2022 and the sales volume is greater than 300.

The coordinator node 203 generates the index query task based on the parsed information, to indicate the index node to filter shards of Table 1, so as to obtain a target shard through filtering. The target shard is a shard including the data (that is, target data) that meets the query condition. The shard herein may be data objects at different granularities in a storage system 30, for example, a partition, a file, a data block, or the like corresponding to Table 1. The following provides descriptions by using the partition, the file, the data block as an example.

In this embodiment, each index node corresponds to a data range of the target object, and is responsible for managing an index corresponding to data in the data range. In other words, the index node filters shards based on indexes in the data range corresponding to the index node. It should be noted that, for a same index node, a data range corresponding to the index node in an index creation stage may be the same as or different from a data range corresponding to the index node in a data processing stage. This is not limited in this embodiment.

In this embodiment, index query tasks sent by the coordinator node 203 to the plurality of index nodes may be the same or may be different.

Example 1: The index query tasks sent by the coordinator node 203 to the plurality of index nodes are the same.

For example, a process of generating the index query task may include: The coordinator node 203 obtains metadata of the target object (for example, Table 1). The metadata includes a correspondence between Table 1 and a partition/file. The coordinator node 203 generates the index query task based on the metadata of the target object and the query condition. The index query task may include information about a query object and the query condition. The data of the target object includes data of the query object. For example, the target object is Table 1, and the query object is one or more partitions corresponding to Table 1, or one or more files corresponding to Table 1, or one or more data blocks corresponding to Table 1.

Table 2 shows a correspondence between Table 1 and data objects at different granularities. It may be understood with reference to FIG. 3.

**Table 2. Correspondence between Table 1 and a data object**

| Table | Partition | File | Block |
|---|---|---|---|
| Sales table (Table 1) | Partition 0 (date=20220717) | File 10 | Block 0 to data 2 |
| | | File 11 | Block 0 and block 1 |
| | | File 12 | Block 0 |
| | | File 13 | Block 0 to block 3 |
| | | File 14 | Block 0 to block 5 |
| | Partition 1 (date=20220718) | File 15 | ... |
| | | File 16 | ... |
| | | File 17 | ... |
| | | File 18 | ... |
| | | File 19 | ... |

Metadata in Table 1 includes a correspondence between Table 1 and each of the partition 0 and the partition 1, or a correspondence between Table 1 and each of the file 10 to the file 19. It can be understood that, if Table 1 is a non-partition table, the metadata in Table 1 may include only a correspondence between a table and a file.

Based on different metadata, there are the following several examples of a manner of generating the index query task:

Example 1: The query object is any one of at least one file corresponding to the target object (for example, Table 1).

For example, if the metadata in Table 1 includes a correspondence between Table 1 and a file, for example, when Table 1 is a non-partition table, the query object may be all files corresponding to Table 1, for example, assuming that the metadata in Table 1 includes the file 0 to the file 9 in Table 1, the index query task may include information (for example, a file path) about the file 0 to the file 9 and the query condition, to indicate to query, from the file 0 to the file 9, a file that includes the target data.

Example 2: When the target object corresponds to a plurality of partitions, the query object may be a target partition corresponding to the target object, and the target partition is a partition that includes the target data and that is in a plurality of partitions corresponding to the target object.

For example, the coordinator node 203 may determine, with reference to the query condition (date=20220717), that the partition 0 includes the target data and the partition 1 does not include the target data, and the coordinator node 203 generates the index query task by using the partition 0 as the query object. Herein, the query object is a partition that includes the target data. For example, the index query task may include information about the partition 0 (for example, a path name of the partition 0) and the query condition, to indicate the index node to query, from the partition 0, the file that includes the target data.

Example 3: The query object may be any one of at least one file corresponding to the target partition.

For example, the target partition is a partition 0, and the query object is any one of at least one file (the file 10 to the file 14) corresponding to the partition 0. For example, the index query task may include information about the file 10 to information about the file 14 (for example, a file name) and the query condition, to indicate to query, from the file 10 to the file 14, a file that includes the target data.

Example 4: The query object may be any one of at least one data block corresponding to the target partition (or the target object).

For example, the target partition is the partition 0, and the query object is any one of at least one data block (as shown in Table 2, including a data block 0 to a data block 2 of the file 10, a data block 0 and a data block 1 of the file 11, a data block 0 of the file 12, and the like) corresponding to the partition 0. For example, the index query task may include information about the at least one data block (which may be a file path of a file to which the data block belongs and an offset of the data block in the file) and the query condition.

It can be learned that, in this case, index query tasks generated by the coordinator node 203 for the plurality of index nodes are the same. Correspondingly, an index node performs a filtering operation based on an index of data that is in the data range corresponding to the index node and that belongs to the query object. The plurality of index nodes herein may also be all index nodes in the system, or may be any some other index nodes. If an index node determines that a data range corresponding to the index node does not include the data of the query object, the index node does not perform an operation in a subsequent procedure.

Example 2: The index query tasks sent by the coordinator node 203 to the plurality of index nodes are different.

The coordinator node determines a plurality of target index nodes corresponding to the target object. The target index nodes are index nodes that are in the plurality of index nodes and that include data of the target object in a corresponding data range. The coordinator node 203 generates a dedicated index query task for each target index node.

A process may include: The coordinator node 203 obtains metadata of each of the plurality of index nodes based on the metadata of the target object. The metadata indicates a data range corresponding to the index node. The coordinator node 203 determines the target index node based on the metadata of the target object and the metadata of each index node, and generates the index query task for each target index node based on a data range that corresponds to each target index node and that belongs to the target object. Each index query task includes information about a query object and the query condition. In this case, a plurality of index query tasks are different. For example, each index query task indicates a different query object.

For example, the metadata of the index node includes one or more pieces of the following information:
a correspondence between an index node and a partition, a correspondence between an index node and a file, and a correspondence between an index node and a data block.

In an optional manner, a data range corresponding to an index node includes data in a storage node that is deployed in a same computing device as the index node. For example, with reference to FIG. 2A and FIG. 3, it is understood that a data range corresponding to the index node 301A includes data in a storage node 310A. A data range corresponding to the index node 301B includes data in a storage node 310B. Table 3 shows an example of metadata of index nodes 301A and 301B.

**Table 3. Metadata of an index node**

| Index node | Data range | | |
|---|---|---|---|
| | Partition | File | Data block |
| Index node 301A | Partition 0 | File 10 | Block 0 to block 2 |
| | | File 11 | Block 0 and block 1 |
| | | File 12 | Block 0 |
| Index node 301B | Partition 0 | File 13 | Block 0 to block 3 |
| | | File 14 | Block 0 to block 5 |
| ... | ... | ... | ... |

It can be learned from Example 2 that, the partition 0 includes the target data, and the partition 1 does not include the target data. The coordinator node 203 determines, based on metadata of the index node 301A and metadata of the index node 301B that are shown in Table 3, that a data range corresponding to the index node 301A includes the file 10 to the file 12 in the partition 0. A data range corresponding to the index node 301B includes the file 13 and the file 14 in the partition 0. In this example, the target index node is the index nodes 301A and 301B, and the coordinator node 203 generates a corresponding index query task for each of the index nodes 301A and 301B.

For example, the index query task may include information about a query object that is in a data range corresponding to an index node and that belongs to a target object (or a target partition), and index query tasks of different target index nodes may be different. The query object herein may be a file, data block, or the like.

For example, an index query task 1 corresponding to the index node 301A includes information about the file 10 to the file 12 and the query condition. An index query task 2 corresponding to the index node 301B includes information about the file 13 and the file 14 and the query condition. Optionally, information about each file may further include storage information of an index of the file, and storage information of each index indicates a storage location of the index, so that an index node obtains the index of the file from the storage location.

For another example, the index query task 1 corresponding to the index node 301A includes information about the block 0 to the block 2 in the file 10, information about the data 0 and the block 1 in the file 11, information about the block 0 in the file 12, and the query condition. Optionally, information about each block may further include storage information that indicates a storage location of an index of the block.

When there are a plurality of query objects, the index query task may include all query objects, or may include a specified quantity of query objects. In other words, the coordinator node 203 may send a plurality of index query tasks to one index node, to indicate all query objects.

It should be noted that, the index of the file may include a file index, a block index, and a row group index that correspond to the file. Similarly, the index of the block may include a block index and a row group index. In addition, it should be noted that, Table 2 and Table 3 are merely examples, metadata of data may include more or less information than that in Table 2, and metadata of the index node may include more or less information than that in Table 3. For example, the metadata of the index node may not include partition information, or may not include block information, or index information may be added. The index information includes but is not limited to one or more of an index level, an index type, storage information of an index, and the like, or the data range corresponding to the index node may be alternatively represented in another manner. This is not limited in this application.

Step 703: The coordinator node 203 sends an index query task to each of the plurality of index nodes 301.

In Example 1, the coordinator node 203 may send an index query task to each of any some or all index nodes in the system. In Example 2, the coordinator node 203 only sends a corresponding index query task to each target index node.

The index query task requests to query, from the query object, a target shard that includes the target data.

Step 704: After receiving the index query task, each of the plurality of index nodes determines the target shard that is in a data range managed by the index node and that includes the target data.

Step 704 is further described with reference to Example 1 and Example 2 in step 702.

In Example 1, because index query tasks received by all index nodes are the same, each index node may obtain metadata of the index node, and determine, based on the metadata of the index node, whether a data range corresponding to the index node includes data of a query object. If the data range includes the data of the query object, the index node executes the index query task. Alternatively, if the data range corresponding to the index node does not include the data of the query object, the index query task is not executed.

An index node that executes the index query task performs filtering based on an index of a specified object, to determine the target shard. The specified object is an object that intersects with the query object in a data range corresponding to the index node. For example, the specified object may be a target partition, a target file, or a target data block.

For example, in Example 1, it is assumed that the index query task 1 includes the information about the partition 0 and the query condition. After receiving the index query task 1, the index node 301A determines, based on the metadata of the index node 301A, a specified object that is in a data range corresponding to the index node 301A and that belongs to the partition 0. With reference to Table 3, it can be learned that a specified object corresponding to the index node 301A includes the file 10, the file 11, and the file 12 in the partition 0. Then, the index node performs a filtering operation based on an index of each specified object.

In Example 2, after receiving the index query task, the target index node may directly execute the index query task without performing the foregoing determining, and perform a filtering operation based on an index of a query object indicated in the index query task. In other words, each query object indicated in the index query task herein is a specified object.

The following describes, by using the index node 301A as an example, a procedure of executing the index query task.

This embodiment provides a plurality of levels of indexes such as a file index, a block index, and a row group index. When executing the index query task, the index node may perform filtering at a plurality of data granularities based on the plurality of levels of indexes.

The index query task may include the information about the query object and the query condition. For example, the query condition may include information about a target column and a predicate condition. For example, the query condition is a commodity whose sales volume is greater than or equal to 300 in a sales volume column. It can be learned that the target column is the sales volume column, and the predicate condition is "≥300". For ease of description, that the query condition is a commodity whose sales volume is greater than or equal to 300 in the sales volume column is used as an example below.

In an implementation, the index node 301A performs filtering based on the file index (referring to step a) and performs filtering based on the block index (referring to step b).

Step a: The index node 301A may obtain a file index corresponding to a target column in each specified object, and filter files based on the file index, to obtain one or more target files after filtering. The target file is a file including data that meets the query condition. For example, a value range indicated by a file index of a target column in the target file intersects with a value range indicated by the predicate condition.

For example, a type of the file index is min/max. If the specified object includes the file 10, the file 11, and the like, assuming that a file index corresponding to a sales volume column in the file 10 is [0, 500], and a predicate condition is "≥300", it may be determined that the file 10 includes a commodity whose sales volume is greater than or equal to 300, in other words, some data in the file 10 is target data, and the file 10 is a target file.

For another example, assuming that a file index of a sales volume column in the file 11 is [10, 200], and a predicate condition is "≥300", because 200<300, it may be learned that the file 11 does not include a commodity whose sales volume is greater than or equal to 300, no data in the file 11 is target data, and the file 11 is not a target file.

Each index node determines one or more target files in this method. In this case, a target is allocated as a target file.

The index node 301A obtains an index in a plurality of manners. For example, the index node 301A obtains the index from a memory of the index node 301A, and/or the index node 301A obtains the index from another storage medium. It should be noted that, the index node 301A may cache, in the memory of the index node 301A, an index in a data range managed by the index node 301A, so that an index query task can be quickly executed. If the memory of the index node 301A has a limited capacity and cannot cache all indexes, after some indexes in the memory are used, the other indexes may be read from a storage, for example, a storage node into the memory based on storage information of the indexes. For example, the storage information of the index includes one or more of a storage node in which an index file is located, a file path, a file handle, an offset, a data length, and the like. The storage information of the index may be recorded in the metadata of the index node. For details, refer to the related descriptions. Details are not described herein again. A manner of obtaining an index is not repeatedly described below.

Step b: The index node 301A performs filtering based on a block index of each target file. For example, the index node 301A determines each data block that is in a data range corresponding to the index node 301A and that belongs to the target file, and obtains one or more target blocks through filtering based on a block index of a target column in each determined data block. The target block is a data block including data that meets the query condition. For example, a value range indicated by a block index of a target column in the target block intersects with a value range indicated by the predicate condition.

For example, it is assumed that target files determined by the index node 301A include the file 10 and the file 12. The file 10 is used as an example. Assuming that a block index corresponding to a sales volume column in a block 0 in the file 10 is [0, 200], and a predicate condition is Sales volume≥300, it may be determined that the block 0 does not include a commodity whose sales volume is greater than or equal to 300, that is, no data of the block 0 is target data, and the block 0 is not a target block.

For another example, assuming that a block index corresponding to a sales volume column in a block 1 in the file 10 is [100, 400], and a predicate condition is Sales volume≥300, it may be determined that the block 1 includes a commodity whose sales volume is greater than or equal to 300, some data in the block 1 is target data, and the block 1 is a target block.

Each index node determines one or more target block in this method. In this case, the target shard is the target block.

In another implementation, the index node 301A performs only filtering based on the block index.

For example, the index node 301 obtains one or more target blocks through filtering based on a block index corresponding to a target column in a specified object. For a specific implementation, refer to the description. Details are not described herein again.

It should be understood that, different index nodes determine different target files and target blocks.

Step 705: Each index node sends, to the coordinator node 203, a first task result (that is, an execution result of the index query task) determined by the index node.

A first task result of the index node 301A may include information about one or more target blocks determined by the index node 301A.

For example, the index node 301Areturns a first task result 1, and the index node 301B returns a first task result 2. The first task result 1 may include information about each target block determined by the index node 301A. The first task result 2 may include information about each target block determined by the index node 301B.

Step 706: The coordinator node 203 determines second query tasks (for example, a data query task) based on the plurality of first task results.

The coordinator node 203 parses the query request into a plurality of data query tasks based on a plurality of first task results sent by the index nodes. Each query task includes operand information (denoted as first operand information) and operation information (denoted as first operation information).

The first operand information indicates to-be-operated data, for example, a target block. Different data query tasks indicate different target blocks. The first operation information indicates a to-be-executed operation, and may include one or more pieces of operator information. For example, for the query request, the operator information may include a scan operator, a filter operator, and a filtering condition of the filter operator. For example, Sales volume≥300.

The data query task indicates to perform a corresponding operation on data in the target block based on a specified operator. For example, for the data query task, the worker node reads each row of data in the target block based on the scan operator, and then filters each row of read data based on the filter operator, to obtain data that meets the filtering condition, that is, the target data. Alternatively, the scan operator and the filter operator may also be replaced with a scanandfilter operator.

The following describes a manner of generating the data query task. For example, the coordinator node 203 may generate one data query task based on one first task result, and the two first task results carry same information about a target block. For example, if the first task result 1 includes the information about the one or more target blocks determined by the index node 301A, a data query task 1 generated based on the first task result 1 may include the information about the one or more target blocks determined by the index node 301A. If the first task result 2 includes the information about the one or more target blocks determined by the index node 301B, a data query task 2 generated based on the first task result 2 may include the information about the one or more target blocks determined by the index node 301B.

For another example, one data query task may also include some target blocks or some operators in one first task result. This is not limited in this embodiment.

Step 707: The coordinator node 203 sends data query tasks to a plurality of worker nodes.

Step 708: Each of the plurality of worker nodes executes a data query task.

In an implementation, the worker node may push down some operators in the data query task to another node, for example, an index node for execution. In an architecture shown in FIG. 2A, a worker node 204A may push down the scanandfilter operator (included in a pushdown task) to the index node 301A close to a data source side for execution. In this way, the index node 301A may return data obtained through filtering to the worker node 204A, to reduce a network data transmission amount, and reduce network bandwidth pressure and overheads.

Usually, the pushdown task includes some tasks in query tasks, and may include second operand information and second operation information. The second operand information is some or all to-be-operated data indicated by the first operand information in the data query task. The second operation information is some or all operator information carried in the data query task. The operator that may be pushed down may be a specified operator, for example, the scan operator, or the filter operator (or the scanandfilter operator).

For example, it is assumed that target blocks indicated by the data query task 1 include the block 0 in the file 10, the block 2 in the file 10, and the block 1 in the file 12, and the first operation information includes the scanandfilter operator and the filtering condition. A pushdown task 1 is generated based on the data query task 1. Target blocks indicated by the pushdown task 1 include the block 0 in the file 10, the block 2 in the file 10, and the block 1 in the file 12. The second operation information includes the scanandfilter operator and the filtering condition. In this case, the pushdown task is the same as the data query task.

The following describes, by using the index node 301A as an example, a process in which the index node executes the pushdown task.

The index node 301A receives the pushdown task 1, obtains a row group index of a target column in a target block indicated in the pushdown task 1, and obtains one or more target row groups through filtering based on the row group index of the target column in the target block indicated in the pushdown task 1. The target row group is a row group including the target data. For example, a value feature indicated by a row group index of a target column in the target row group intersects with a value range indicated in the predicate condition.

For example, it is assumed that target blocks indicated in the pushdown task 1 include the block 0 and the block 2 in the file 10, and the block 1 in the file 12. The block 0 is used as an example. As shown in FIG. 6, it is assumed that the block 0 includes five row groups, and the five row groups are respectively a row group 0 to a row group 4. The row group 0 is used as an example. The index node 301A determines, based on a row group index 0 corresponding to a target column in the row group 0 and the predicate condition, whether the row group 0 is a target row group. For example, a value range recorded by the row group index 0 is [20, 350], and the predicate condition is Sales volume≥300. It can be learned that the row group 0 includes a commodity whose sales volume is greater than 300, some data in the row group 0 is target data, and the row group 0 is a target row group. For another example, a value range recorded in a row group index 1 is [20, 100], and the predicate condition is Sales volume≥300. In other words, a record in the row group 1 does not include a commodity whose sales volume is greater than 300, and data in the row group 1 is not target data. In other words, the row group 1 is not a target row group.

It should be noted that, a manner in which an index node obtains a row group index may be the foregoing manner. For example, the index node caches the row group index in the memory, or reads the row group index from another storage device. Details are not described herein again. In another possible case, if a file that includes the target block and that is read by the index node includes a row group index, for example, an ORC file shown in FIG. 4, the index node may also perform filtering based on a row group index carried in the ORC file. This is not limited in this embodiment. In addition, it should be noted that, if the ORC file includes a row group index, the pushdown task herein may also be pushed down to the storage node for execution, and the storage node performs a function of the index node, to obtain one or more target row groups.

Each index node determines one or more target row groups in the foregoing method. It should be understood that, different index nodes determine different target row groups.

Then, the index node reads the data in the target row group based on the scanandfilter operator, and filters the data in the target row group, to obtain the target data.

For example, it is assumed that target row groups determined by the index node 301A include a row group 0, a row group 1, and a row group 5 in the block 0 in the file 10, a row group 2 in the block 2 in the file 10, and a row group 1, a row group 3, and a row group 4 in the block 1 in the file 12. The row group 0 in the block 0 in the file 10 is used as an example. The index node 301A reads, based on the scan operator, a plurality of rows of data included in a sales volume column in the row group 0 in the block 0, and filters the plurality of rows of read data based on the filter operator, to obtain one or more rows of data that meets the filtering condition, that is, the target data. For example, the sales volume column in the row group 0 includes 100 rows of data, the index node 301A obtains, through filtering, data whose value (that is, a sales volume) is at least 300 in the 100 rows of data, and the data is target data that meets the filtering condition.

The index node 301A sequentially reads and filters data in all target row groups in this method, to obtain target data in all the target row group, and sends the target data obtained through filtering to the worker node 204A.

After receiving the target data sent by the index node 301A, the worker node 204A performs corresponding operations based on the other operators. Because the pushdown task 1 is the same as the data query task 1, the worker node 204 herein does not need to perform another operation. The worker node 204A generates a second task result, and the second task result includes received target data.

It should be noted that, that the data query task includes the scanandfilter operator is only used as an example above. Actually, different query requests may be applied to different operators, and a specific operator to be used depends on the query condition. If the data query task includes a plurality of operators (usually executed in serial), the worker node usually pushes down some operators to the index node. Correspondingly, the worker node 204 further needs to perform a remaining operator operation based on a pushdown task result returned by the index node 301, and returns an obtained operation result to the coordinator node 203 based on the second task result.

For example, assuming that the query request is requesting a total sales volume of a commodity whose sales date is July 17, 2022 and whose sales volume is greater than 300, operator information carried in the data query task includes the scanandfilter operator and an aggregation operator. The worker node may push down the scanandfilter operator to the index nod. The index node determines, based on the scanandfilter operator, target data that meets the filtering condition. Then, the worker node performs summation on the target data based on the aggregation operator, and returns a sum to the coordinator node 203. Finally, the coordinator node 203 sums a plurality of sums returned by the plurality of index nodes, to obtain a value of the total sales volume of the commodity whose sales date is July 17, 2022 and whose sales volume is greater than 300. In this case, the data query result includes the value of the total sales volume.

In another implementation, the worker node executes all data query tasks. For example, in an architecture shown in FIG. 2B, when executing the data query task, the worker node 204A determines a target row group by using the index node 301A (The index node 301A filters a row group in a target block based on a row group index of the target block, to obtain one or more target row groups. For details, refer to the foregoing description. Details are not described herein again). Then, the worker node 204A reads data of the target row group from the storage node 310A based on the scanandfilter operator, and filters the read data, to determine the target data. In this manner, the worker node 204A reads the data of the target row group from the storage node 310A. Compared with a manner in which the worker node reads an entire ORC file or an entire stripe in the ORC file from the storage node in FIG. 1, in this manner, a network data transmission amount can be reduced, and network bandwidth pressure and overheads can be reduced.

Step 709: Each of the plurality of worker nodes sends the second task result to the coordinator node 203.

Step 710: The coordinator node 203 generates a data query result based on a plurality of received second task results.

In the foregoing example, the query task result includes original data that meets the filtering condition and that is determined by the index node. The coordinator node 203 aggregates original data included in the plurality of query task results, to generate a data query result. The data query result includes original data carried in all query task results received by the coordinator node 203.

Step 711: The coordinator node 203 sends the data query result to the client 102.

In the design, the coordinator node 203 generates the plurality of index query tasks based on the query request, and sends the plurality of index query tasks to the plurality of index nodes. The plurality of index nodes perform an index-based filtering operation in parallel, to improve data processing efficiency. Each index node may perform filtering operations at a plurality of granularities based on a plurality of levels of indexes, to reduce a quantity of read indexes and a quantity of filtering operations. In addition, compared with an existing manner, in this manner, when the coordinator node 203 is faulty, an index-based filtering operation may still be performed, and an upper limit of a memory of a single node (an existing coordinator node) may be broken through. Compared with an existing solution, in this manner, an index capability may be improved by a maximum of N times.

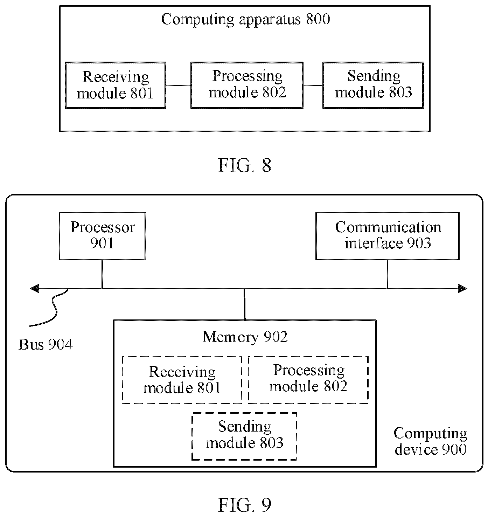

Based on a same inventive concept as the method embodiments, an embodiment of this application further provides a computing apparatus. The apparatus is configured to perform the method performed by the index node in the method embodiments in FIG. 5 and FIG. 7. As shown in FIG. 8, a computing apparatus 800 includes a receiving module 801, a processing module 802, and a sending module 803. Specifically, in the computing apparatus 800, a connection is established between the modules through a communication path.

The receiving module 801 is configured to receive an index query task from a coordinator node. The index query task includes information about a query object and a query condition. For a specific implementation, refer to descriptions in step 703 in FIG. 7. Details are not described herein again.

The processing module 802 is configured to determine, based on the received index query task, a target shard that is in a data range managed by the computing apparatus, that belongs to the query object, and that includes data that meets the query condition. For a specific implementation, refer to descriptions in step 704 in FIG. 7. Details are not described herein again.

The sending module 803 is configured to send information about the target shard to the coordinator node. For a specific implementation, refer to descriptions in step 705 in FIG. 7. Details are not described herein again.

FIG. 9 is a schematic diagram of a structure of a computing device according to an embodiment of this application. The computing device is configured to perform the method performed by the index node in the method embodiments in FIG. 5 and FIG. 7. A computing device 900 includes a processor 901, a storage 902, and a communication interface 903. The processor 901, the storage 902, and the communication interface 903 may be connected through a bus 904.

The processor 901 is configured to execute instructions stored in the storage 902, so that the computing device 900 performs a data processing method provided in this application. The processor 901 may be but is not limited to any one or more of processors such as a central processing unit (central processing unit, CPU), a data processing unit (data processing unit, DPU), a system on chip (system on chip, SOC), a programmable gate array (field programmable gate array, FPGA), a graphics processing unit (graphics processing unit, GPU), and an application specific integrated circuit (application specific integrated circuit, ASIC).

The storage 902 is configured to store computer instructions and data. For example, the storage 902 stores computer instructions and data that are required for implementing the data processing method provided in this application. The storage 902 includes a volatile memory (volatile memory), for example, a random access memory (random access memory, RAM) or a dynamic random access memory (dynamic random access memory, DRAM); or may be a nonvolatile memory (non-volatile memory), for example, a read-only memory (read-only memory, ROM), a storage-class memory (storage-class memory, SCM), a flash memory, a hard disk drive (hard disk drive, HDD), or a solid state disk (solid state drive, SSD).

The storage 902 stores executable program code, and the processor 901 executes the executable program code, to separately implement functions of the receiving module 801, the processing module 802, and the sending module 803, so as to implement the data processing method. In other words, the storage 902 stores instructions used by the computing apparatus 800 to perform the data processing method provided in this application.

The communication interface 903 is configured to communicate with an internal device or an external device, for example, receive an index query task sent by the coordinator node 203, or communicate with the storage node 310, to complete data access. For example, the communication interface 903 may be a network adapter.

The bus 904 may be a peripheral component interconnect standard (Peripheral Component Interconnect Express, PCIe) bus, a double data rate (double data rate, DDR) bus, a serial advanced technology attachment (serial advanced technology attachment, SATA) bus, a serial connection SCSI (serial attached scsi, SAS) bus, a controller area network (Controller Area Network, CAN), an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. Buses may be classified into an address bus, a data bus, a control bus, and the like. For ease of representation, only one line is used to represent the bus in FIG. 9, but this does not mean that there is only one bus or only one type of bus. The bus 904 may include a path for transmitting information between components (for example, the storage 902, the processor 901, and the communication interface 903) of the computing device 900.

An embodiment of this application further provides a computer program product including instructions. The computer program product may be software or a program product that includes instructions and that can run on a computing device or be stored in any usable medium. When the computer program product runs on at least one computer device, the at least one computer device is enabled to perform the method performed by the index node in the embodiment in FIG. 5 or FIG. 7. For details, refer to descriptions in steps in FIG. 5 or FIG. 7. Details are not described herein again.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the method performed by the index node in the embodiment in FIG. 5 or FIG. 7. For details, refer to descriptions in steps in FIG. 5 or FIG. 7. Details are not described herein again.

Optionally, a computer-executable instruction in this embodiment of this application may also be referred to as application program code. This is not specifically limited in this embodiment of this application.

A person of ordinary skill in the art may understand that various numbers such as "first" and "second" in this application are merely used for differentiation for ease of description, and are not used to limit the scope of embodiments of this application or represent a sequence. The character "/" usually indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one item (piece or type) of a, b, or c may indicate a, b, c, a and b, a and c, b and c, or a, b, and c, where a, b, and c may be singular or plural. The term "a plurality of" means two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, for example, a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Alternatively, the storage medium may be integrated into a processor. The processor and the storage medium may be disposed in the ASIC.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A data processing system, wherein the system comprises a coordinator node, a plurality of index nodes, and a plurality of worker nodes;
the coordinator node is configured to: generate a first query task based on a query request, and send the first query task to the index node, wherein the query request is used to query, from a target object, data that meets a condition, the target object is divided into a plurality of shards, the plurality of shards are stored in at least one storage node, the target object is divided into a plurality of data ranges, and each of the plurality of index nodes manages one data range of the target object;
a first index node in the plurality of index nodes is configured to: determine, based on the received first query task, a target shard that is in a first data range managed by the first index node and that comprises the data queried by using the query request, and send information about the target shard to the coordinator node, wherein the first index node is any node in the plurality of index nodes; and
the coordinator node receives information about a plurality of target shards that is sent by the plurality of index nodes, generates second query tasks for the plurality of target shards, and schedules the plurality of worker nodes to execute the second query tasks for the plurality of target shards.

2. The system according to claim 1, wherein the first index node corresponds to index information of a shard corresponding to the first data range; and
when determining the target shard, the first index node is specifically configured to:
determine, based on the index information of the shard corresponding to the first data range, the target shard that comprises the data queried by using the query request.

3. The system according to claim 1 or 2, wherein each shard and index information corresponding to each shard are stored independently.

4. The system according to claim 2, wherein the target object is divided into a plurality of files, each file is divided into a plurality of data blocks, each data block corresponds to one shard, the first query task comprises information about a query object, and data of the target object comprises data of the query object; and
when determining the target shard that is in the first data range managed by the first index node and that comprises the data queried by using the query request, the first index node is specifically configured to:
obtain at least one target file through filtering based on index information of a file corresponding to the query object in the first data range, wherein each target file comprises the data queried by using the query request, and obtain at least one target data block through filtering based on index information of a data block corresponding to each target file, wherein the target data block is the target shard.

5. The system according to claim 2, wherein the target object is divided into a plurality of data blocks, each data block corresponds to one shard, the first query task comprises information about a query object, and data of the target object comprises data of the query object; and
when determining the target shard that is in the first data range managed by the first index node and that comprises the data queried by using the query request, the first index node is specifically configured to:
obtain at least one target data block through filtering based on index information of a data block corresponding to the query object in the first data range, wherein the target data block is the target shard.

6. The system according to claim 4 or 5, wherein the plurality of files are grouped into a plurality of partitions, and a target partition is a partition in the plurality of partitions that comprises the target shard; and
the query object comprises the target partition; or
the query object comprises the plurality of files corresponding to the target object; or
the query object comprises at least one file corresponding to the target partition; or
the query object comprises at least one file that is in the first data range and that belongs to the target object; or
the query object comprises at least one file that is in the first data range and that belongs to the target partition.

7. The system according to claim 5, wherein the plurality of files are grouped into a plurality of partitions, and a target partition is a partition in the plurality of partitions that comprises the target shard; and
the query object comprises at least one data block comprised in at least one file corresponding to the target object; or
the query object comprises at least one data block comprised in at least one file corresponding to the target partition; or
the query object comprises at least one data block comprised in at least one file that is in the first data range and that belongs to the target object; or
the query object comprises at least one data block comprised in at least one file that is in the first data range and that belongs to the target partition.

8. The system according to any one of claims 1 to 7, wherein the first index node and the storage node are deployed on a same physical machine.

9. The system according to any one of claims 1 to 7, wherein the first index node and the worker node are deployed on a same physical machine.

10. A computing apparatus, comprising:
a receiving module, configured to receive an index query task from a coordinator node, wherein the index query task comprises information about a target object and a query condition;
a processing module, configured to determine, based on the received index query task, a target shard that is in a data range managed by the computing apparatus, that belongs to the target object, and that comprises data that meets the query condition; and
a sending module, configured to send information about the target shard to the coordinator node.

11. The apparatus according to claim 10, wherein the computing apparatus corresponds to index information of a shard corresponding to a first data range; and
when determining the target shard, the processing module is specifically configured to determine, based on the index information of the shard corresponding to the first data range, a target shard that comprises data queried by using the query request.

12. The apparatus according to claim 11, wherein the target object is divided into a plurality of files, each file is divided into a plurality of data blocks, each data block corresponds to one shard, the first query task comprises information about a query object, and data of the target object comprises data of the query object; and
when determining the target shard that is in the first data range managed by the computing apparatus and that comprises the data queried by using the query request, the processing module is specifically configured to: obtain at least one target file through filtering based on index information of a file corresponding to the query object in the first data range, wherein each target file comprises the data queried by using the query request, and obtain at least one target data block through filtering based on index information of a data block corresponding to each target file, wherein the target data block is the target shard.

13. The apparatus according to claim 11, wherein the target object is divided into a plurality of files, each file is divided into a plurality of data blocks, each data block corresponds to one shard, the first query task comprises information about a query object, and data of the target object comprises data of the query object; and
when determining the target shard that is in the first data range managed by the computing apparatus and that comprises the data queried by using the query request, the processing module is specifically configured to obtain at least one target data block through filtering based on index information of a data block corresponding to the query object in the first data range, wherein the target data block is the target shard.

14. The apparatus according to claim 12 or 13, wherein the plurality of files are grouped into a plurality of partitions, and a target partition is a partition in the plurality of partitions that comprises the target shard; and
the query object comprises the target partition; or
the query object comprises the plurality of files corresponding to the target object; or
the query object comprises at least one file corresponding to the target partition; or
the query object comprises at least one file that is in the first data range and that belongs to the target object; or
the query object comprises at least one file that is in the first data range and that belongs to the target partition.

15. The apparatus according to claim 13, wherein the plurality of files are grouped into a plurality of partitions, and a target partition is a partition in the plurality of partitions that comprises the target shard; and
the query object comprises at least one data block comprised in at least one file corresponding to the target object; or
the query object comprises at least one data block comprised in at least one file corresponding to the target partition; or
the query object comprises at least one data block comprised in at least one file that is in the first data range and that belongs to the target object; or
the query object comprises at least one data block comprised in at least one file that is in the first data range and that belongs to the target partition.

16. A computing device, comprising a processor and a storage, wherein
the processor of the at least one computing device is configured to execute instructions stored in the storage of the at least one computing device, so that the computing device performs a function of the first index node in the system according to any one of claims 1 to 9.

17. A computer-readable storage medium, wherein when the computer-readable storage medium is executed by a storage device, the storage device performs a function of the first index node in the system according to any one of claims 1 to 9.
